(19) Europäisches Patentamt
European Patent Office
Office européen des brevets

(11) **EP 3 905 107 A1**

(12) **EUROPEAN PATENT APPLICATION**

(43) Date of publication:
**03.11.2021  Bulletin 2021/44**

(51) Int Cl.:
**G06K 9/00** *(2006.01)*     **G06K 9/46** *(2006.01)*
**G06K 9/62** *(2006.01)*     **G06N 3/04** *(2006.01)*

(21) Application number: **20172028.1**

(22) Date of filing: **29.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
- **Linder, Timm**
  **71032 Boeblingen (DE)**
- **Pfeiffer, Kilian Yutaka**
  **L-1621 Luxembourg (LU)**
- **Vaskevicius, Narunas**
  **70469 Stuttgart (DE)**

(54) **COMPUTER-IMPLEMENTED METHOD FOR 3D LOCALIZATION OF AN OBJECT BASED ON IMAGE DATA AND DEPTH DATA**

(57)     The invention relates to a computer-implemented method for 3D localization of an object based on image data and depth data indicating distance information for pixels of an image represented by the image data, wherein the method applies a convolutional neural network (1) with a first set (2) of consecutive layers (21), a second set (3) of consecutive layers (31) and a third set (5) of consecutive layers (51), each layer being configured with one or more filters, wherein the convolutional neural network (1) is trained to associate an identification/ classification of an object and corresponding 3D localization data for the identified/classified object to an image data item and a depth data item, comprising the steps of:
- Extracting one or more image data features from the image data applying the first set (2) of layers (21) of the convolutional neural network (1);
- Extracting one or more depth data features from the depth data applying the second set (3) of layers (31) of the convolutional neural network (1);
- Fusing the one or more image data features and the one or more depth data features to obtain at least one fused feature map;
- Processing the at least one fused feature map by applying the third set (5) of layers (51) of the convolutional neural network (1) to identify/classify the object and to provide the 3D localization data for the identified/classified object, wherein the 3D localization data includes object reference point data.

**Fig. 1**

## Description

Technical field

The present invention relates to image processing, particularly to a field of 3D localization of an object based on image and depth data.

Technical background

Computer-implemented detection of individuals and objects in 3D space is essential for service, domestic and industrial robots that shall interact with their environment. Recent advances have basically solved the unimodal 2D object recognition problem on 2D images. Different strategies for fusing multiple sensor modalities, such as image and depth data, have also been studied with focus on 2D detection.

However, a particular issue of these detection models is to localize a 3D object reference point, such as a 3D centroid, of an individual or an object represented by image and depth data if the individual/object has non-negligible spatial dimensions in three dimensions. Furthermore, large-scale real-world training datasets for 3D detection are scarce and expensive to annotate with 3D ground truth, so that a detection model should particularly be configured to exhibit an outstanding detection quality being trained with a small training data set.

For object recognition based on image data, high-performance algorithms, such as YOLO v3 one-stage detection, are well-known. The YOLO v3 algorithm allows to obtain object outline data, such as bounding boxes indicating the 2D region in which a detected individual/object is located. However, as individuals/objects to be detected may have a significant extension also in the depth dimension, many applications, for instance in robotics, require determining of a 3D object reference point, such as the center of mass or a 3D centroid of the individual/object within the object boundaries. The conventional algorithms for 2D object detection do not provide such a 3D object reference point. They also do not fully exploit additional depth data that can simultaneously be acquired using existing sensors.

Summary of the invention

According to the invention, there is provided a computer-implemented method for 3D localization of an individual or an object based on image data and depth data using a detection model, a computer-implemented method for training such a detection model, a system according and the mobile agent according to the further independent claims.

Further embodiments are indicated in the depending subclaims.

According to a first aspect, a computer-implemented method is provided for 3D localization of an object based on image data and depth data indicating distance information for pixels of an image represented by the image data, wherein the method applies a convolutional neural network with a first set of consecutive layers, a second set of consecutive layers and a third set of consecutive layers, each layer being configured with one or more filters, wherein the convolutional neural network is trained to associate an identification/classification of an object and corresponding 3D localization data for the identified object to an image data item and a depth data item, comprising the steps of:

- Extracting one or more image data features from the image data applying the first set of layers of the convolutional neural network;
- Extracting one or more depth data features from the depth data applying the second set of layers of the convolutional neural network;
- Fusing the one or more image data features and the one or more depth data features to obtain at least one fused feature map;
- Processing the at least one fused feature map by applying the third set of layers of the convolutional neural network to identify/classify the object and to provide the 3D localization data for the identified/classified object, wherein the 3D localization data includes object reference point data.

Above method applies a convolutional neural network to extract 3D localization data from image data and depth data. The image and depth data may correspond to pixel matrices wherein particularly the image data may be provided as RGB data. While for the image data, in general the pixels indicating a brightness and/or a color, depth data indicate the distance information for each of its pixels.

The convolutional neural network is configured to separately perform a feature extraction from the image data and the depth data, respectively. This is made by a number of sets of consecutive (convolutional) layers, each having associated one or more filters, so that image data features and depth data features are separately extracted from the provided input data.

In a fusing stage, the image data features and the depth data features are combined to obtain a fused feature map which is then further processed by applying the third set of consecutive layers. The first, the second and the third set of layers of the convolutional neural network are trained by training data comprising image data and corresponding depth data together with 3D localization data of objects to be identified/classified wherein the 3D localization data include the object reference point data indicating a representative 3D location (3D pixel). The object reference point data is appropriate to also indicate a relevant point of an object even if the object is partly occluded.

Above architecture of the convolutional neural network is flexible and it turned out that it can be efficiently trained with synthetic image and depth data for learning 3D localization including object reference point data.

Particularly, for training the convolutional neural network, sample images based on image and depth data may be cropped and expanded with the corresponding adjustment of the object outline data by zooming in and zooming out. This may be followed by resizing the resulting image to a fixed size rectangular input image to obtain input data for training the convolutional neural network. However, directly applying crop/expansion augmentation and resizing to image and depth data can distract the understanding of objects' metric scale in the perceived environment which is essential for accurate 3D localization. Therefore, for generating training data, it can be provided to preserve the metric scale and aspect ratio of the original image by adapting the depth data according to the zoom level of the crop or expansion during augmentation.

Moreover, for training, a pre-trained RGB YOLO v3 detector model can be used as a starting point, which has been trained using large-scale 2D object detection data sets. For the first and third set of layers, the weights can be copied from the pre-trained model. The weights from the first set of layers may also be transferred to the second set of layers, while the first layer of the second set that takes single-channel depth images is randomly initialized from scratch.

Furthermore, the fusing may include concatenating the image data features and the depth data features, followed by applying a 1x1 convolutional layer with an adjusted number of filters such that the original number of channels is maintained.

It may be provided that the dimension of the concatenated feature maps is reduced to the dimension of the one or more image data features.

Moreover, the object reference point data may comprise a 3D centroid indicating 3D coordinates of a geometric center of the object or a center of mass of the object.

The processing of the at least one fused feature map by applying the third set of layers of the convolutional neural network may be performed to obtain bounding data indicating an outline of the identified/classified object.

It may be provided that the first, second and/or third set of layers include one or more activation layers and/or one or more residual blocks with skip connections.

According to a further aspect, a convolutional neural network is provided with a first set of consecutive layers, a second set of consecutive layers and a third set of consecutive layers, each layer being configured with one or more filters, wherein a fusion layer is configured to fuse one or more image data features obtained by the first set of layers and one or more depth data features obtained by the second set of layers, wherein the convolutional neural network is trained to associate an image data item and a depth data item to an identification/classification of an object and corresponding 3D localization data for the identified/classified object, wherein the 3D localization data includes object reference point data.

According to a further aspect a method for training the above convolutional neural network, wherein the convolutional neural network is trained using training data, wherein each training data item includes image data and depth data, and 3D localization data, wherein at least a part of the training data items is synthetically generated.

Particularly, the synthetically generated training data is rendered using a 3D graphics engine with foreground and background randomization, wherein one or multiple foreground objects are included in each training data item.

According to an embodiment, a further training data item is generated from an image data item and corresponding depth data item of a training data item by

- randomly cropping or expanding the image data from the training data item while maintaining the aspect ratio and
- resizing the dimensions of the cropped/expanded image data item to the dimension of the image data of the training data item by applying a zoom factor which depends on the dimension of the image data of the training data item and the dimension of the cropped image data;
- adapting the depth data item and the associated 3D localization data of the identified/classified object depending on the zoom factor to obtain the further training data item.

According to a further aspect a device is provided for 3D localization of an object/individual based on image data and depth data indicating distance information for pixels of an image represented by the image data, wherein a convolutional neural network is configured with a first set of consecutive layers, a second set of consecutive layers and a third set of consecutive layers, each layer being configured with one or more filters, wherein a fusion layer is configured to fuse one or more image data features obtained by the first set of layers and one or more depth data features obtained by the second set of layers to obtain at least one fused feature map to be further processed by the third set of layers, wherein the convolutional neural network is trained to associate an identification/ classification of an object and corresponding 3D localization data for the identified/classified object to an image data item and a depth data item, wherein the device is further configured to perform the steps of:

- Extracting one or more image data features from the image data applying the first set of layers of the convolutional neural network;
- Extracting one or more depth data features from the depth data applying the second set of layers of the convolutional neural network;
- Fusing the one or more image data features and the one or more depth data features to obtain at least one fused feature map;
- Processing the at least one fused feature map by applying the third set of layers of the convolutional neural network to identify/classify the object and to provide the 3D localization data for the identified/classified object, wherein the 3D localization data includes object reference point data.

Brief description of the drawings

Embodiments are described in more detail in conjunction with the accompanying drawings, in which:

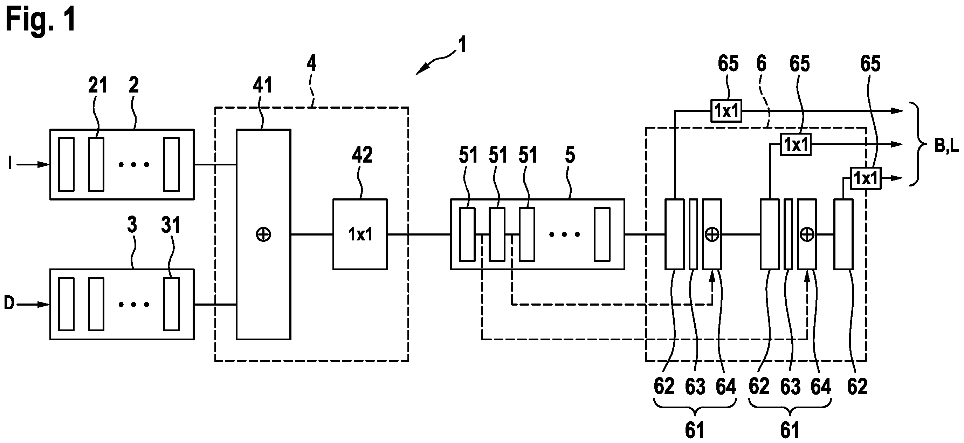

Figure 1    is a schematic view on the architecture of a convolutional neural network trained as a detection model for determining 3D localization data from an image data item and a corresponding depth data item.

Description of embodiments

Figure 1 schematically shows an architecture of a convolutional neural network 1 for processing input data including image data, such as RGB data, and corresponding depth data. Each image data item is associated with a depth data item so that both refer to the same scenery. Image data may be obtained e.g. by means of a camera. The image data may comprise one or more channels of pixel matrices, such as color channels of RGB data or the like.

Depth data can be obtained by an appropriate depth sensor based on LiDAR, Radar, ultrasonic sensors or other sensors, which are capable of capturing a pixel matrix wherein each pixel is associated with a distance value.

The network architecture may be similar to a YOLO v3 network which is modified to also consider the depth data and to estimate 3D localization data.

Basically, the convolutional neural network 1 includes a first set 2 of consecutive layers 21. The layers 21 of the first set 2 may include consecutive convolution, activation and normalization layers as well as residual blocks whose respective configuration is well-known. The number of consecutive convolutional layers of the first set 2 may be between 4 and 60, preferably between 5 and 30. In the input of the first set of layers 21 an image data item I is fed. The first set 2 of layers 21 acts as a feature extractor for the image data item I to obtain one or more image data features.

Furthermore, a second set 3 of consecutive layers 31 is provided. The layers 31 of the second set 3 may include consecutive convolution, activation and corresponding normalization layers as well as residual blocks whose configuration is well-known. The number of consecutive convolutional layers 31 of the second set 3 may be between 5 and 30. In the input of the second set 3 of layers 31 a depth data item D is fed. The second set 3 of layers 31 acts as a feature extractor for the depth data item D to obtain one or more depth data features.

By means of a fusion layer 4, the image data features and the depth data features are fused. Particularly, a concatenation layer 41 is applied to concatenate the feature maps along the channel dimension. Using a 1x1 convolution layer 42 the increased size of the concatenated feature maps is reduced by halving the number of channels to the original channel dimension.

The output of the fusion layer 4 is further processed in a third set 5 of consecutive layers 51. The layers 51 of the third set 5 may include consecutive convolution, activation and associated normalization layers as well as residual blocks whose configuration is well-known. The number of consecutive convolutional layers of the third set 2 may be between 5 and 30. The third set 5 of layers 51 acts as a feature extractor for the combined image and depth data features.

The output of the third set 5 of layers 51 is fed to an output block 6.

The layers of the output block 6 may be included in one or more stages 61 of blocks of consecutive convolution layers 62 each including particularly an activation layer and/or an associated normalization layer for the respective convolution layer, followed by an upsampling layer 63 and a concatenation layer 64 which concatenates the resulting of the upsampling layers 63 with the output of a residual block of the third set of layers 51. The configuration of the residual blocks is well-known in the art. The number of consecutive convolutional layers 62 of each block in the output block 6 may be between 5 and 30. The outputs of each block of convolution layers 62 are input to an 1x1 output layer 65.

The one or more concatenation layers 64 of the output block 6 may combine feature maps from the third set 5 of layers 51 using skip connections. Furthermore, upsampling layers 63 may be provided, particularly directly preceding the concatenation layers 64.

The upsampling layers 63 increase the feature map size in width and height dimensions, and are thus a counterpart to the original convolutions in the feature extractor which reduce those. Upsampling can be implemented via deconvolution. The entire construct (first reducing resolution, than increasing it again) resembles a "feature pyramid".

Like in the original YOLO v3, the upsampling layers allow to obtain predictions at three different scales. The function of the upsampling layers 63 is part of the well-known YOLO v3 architecture.

From one or more layers 61 of the output block 6, feature maps are tapped and supplied to 1x1 convolution layers which provide the outputs indicating bounding data and 3D localization data. The 1x1 output layers 65 are configured to compute regression targets tcu, tcv, tcz and the existing ones for 2D bounding boxes. This may be completely learned from data. In the following formula, it is described how the outputs of the 1x1 layer (tcu, tcv, tcz are part of those) are used to compute cu, cv, cz and subsequently cx, cy, cz. This happens in a postprocessing step, after the network forward pass has been completed.

The bounding data B may correspond to bounding box data indicating an area in the provided image and depth data in which an object has been identified. For each of the identified/classified objects a 3D localization data has been determined which indicate an object reference point L. The object reference point indicates a significant position within the area defined by the bounding data (bounding box). So, the object reference point may indicate a 3D centroid, a center of mass, a geometrical center, a human body joint or the like.

To estimate the metric 3D coordinates $C_x$, $C_y$, $C_z$ of the object reference point, the $C_x$ and $C_y$ coordinates may be inferred from pixel coordinates $C_u$, $C_v$. Pixel coordinates $C_u$, $C_v$ are expressed relative to the predicted 2D bounding box with upper-left corner $b_u$, $b_v$ and width and height $b_w$, $b_h$. A sigmoid function is used to encourage the object reference point to lie within the 2D bounding box. Instead of regressing $C_u$, $C_v$ directly, the regression targets $tC_u$, $tC_v$ are the argument to this sigmoid function. Instead, $C_z$ is regressed directly in metric scale via the regression target $tC_z$:

$$c_u = b_u + b_w \sigma(t_{c_u})$$

$$c_v = b_v + b_h \sigma(t_{c_v})$$

$$c_z = t_{c_z}$$

After $C_u$, $C_v$ and $C_z$ have been computed, the $C_x$ and $C_y$ coordinates can be obtained by back-projecting $C_u$ and $C_v$ using $C_z$ and a given camera matrix K. In computer vision a camera matrix or (camera) projection matrix is a matrix which describes the mapping of a pinhole camera from 3D points in the world to 2D points in an image. This is a well-known concept in computer vision usually obtained through calibration of the camera.

The output parameter structure substantially may correspond to the standard YOLO v3 configuration, where the final 1x1 convolutions of the output stages are extended to predict the regression targets $tC_u$, $tC_v$, $tC_z$ for each bounding box. The training is based on a loss that is minimized during the training process (i.e. required for the backward pass, to compute the gradient). For instance, an l1 loss can be used for tcz and the sigmoid binary cross-entropy loss for tcu and tcv.

For training the convolutional neural network 1, basically stochastic gradient-descent optionally with differing learning rates can be applied. Basically, training is made by training data sets including image data, depth data as well as associated objects indicated by bounding data, such as a bounding box, and by 3D localization data, such as an object reference point.

The training data sets can be obtained from real environment setups or can be synthetically generated, e.g. based on CAD models or photogrammetric 3D scans. To obtain a sufficiently diverse training data set, domain randomization can be performed by, for instance, varying object poses, object count and illumination conditions. Particularly, the training data sets may at least partly be rendered using a semi-photorealistic computer graphics engine to generate synthetic image and depth data items. Certain sensor effects, such as noise patterns, might be simulated in the RGB and/or depth data. The bounding data and 3D localization data of the associated objects can be straight-forward obtained from the CAD models.

The training process may involve a 2D data augmentation step, composed of cropping and expansion of randomly selected image parts with a corresponding adjustment of the bounding data (bounding boxes) so that image parts containing objects can be zoomed in and zoomed out. The obtained image part is then resized to a fixed pixel matrix size to normalize image and depth data dimensions for the convolutional neural network 1. As directly applying this existing form of crop and expansion augmentation and resizing to the pixel matrix dimension of the training data can distort the "understanding" of objects' matrix scale in the perceived environment, this augmentation is enhanced to be depth-aware so that bounding data and 3D localization data of the associated objects are adapted to the current zoom factor.

The zoom factor is based upon the factor applied for the resizing to the pixel matrix dimension needed for training the convolutional neural network. For a square input resolution of $d_n$ x $d_n$ pixels, a random square crop of the size $d_c$ x $d_c$ is selected. Under the assumption of a single image sensor with a known camera matrix K, a crop may be resized to the input dimension $d_n$ x $d_n$ applying a zoom factor of $s = \frac{d_n}{d_c}$. As zooming is usually attributed to a change in focal length and to keep the intrinsic parameters intact, the scaling is applied to the depth values, such that

$$\begin{pmatrix} u \\ v \\ 1 \end{pmatrix} = \mathbf{K} \begin{pmatrix} s & & \\ & s & \\ & & 1 \end{pmatrix} \begin{pmatrix} x \\ y \\ z \end{pmatrix} \frac{1}{z} = \mathbf{K} \begin{pmatrix} x \\ y \\ \frac{z}{s} \end{pmatrix} \frac{1}{\frac{z}{s}}$$

wherein x, y, z is a 3D point resolved in the image sensor frame and $\frac{z}{s}$ is the new scaled depth at input image pixel (u, v).

In addition to depth scaling for generating training data sets with image data items and corresponding depth data items, the 3D localization data of the associated object is scaled as well.

Furthermore, a transfer learning strategy may be applied which may benefit from existing large-scale 2D object detection data sets. Thereby, the layers 21, 51 of the first and third set may be initialized by means of existing YOLO v3 RGB detector weights pre-trained with existing 2D object detection data sets. That means that the weights may be initially set up for the first set 2 of layers 21 and the third set 5 of layers, while for the second set 3 of layers 31 the weights of the first set 2 of layers 21 are duplicated. However, the first layer of the second set 3 of layers 31 may then be initialized from scratch.

At the start of training, the fusion layer 4 is initialized so that the image data features at the output of the first set 2 of layers 21 are forwarded unchanged to the input of the third set 5 of layers 51. The weights of the newly added neurons of the output block are randomly initialized, while leaving the original 2D detection weights unchanged.

By means of this initialization strategy, the pre-trained 2D performance can be maintained despite the changes to the network architecture.

**Claims**

1. Computer-implemented method for 3D localization of an object based on image data and depth data indicating distance information for pixels of an image represented by the image data, wherein the method applies a convolutional neural network (1) with a first set (2) of consecutive layers (21), a second set (3) of consecutive layers (31) and a third set (5) of consecutive layers (51), each layer being configured with one or more filters, wherein the convolutional neural network (1) is trained to associate an identification/ classification of an object and corresponding 3D localization data for the identified/classified object to an image data item and a depth data item, comprising the steps of:

    - Extracting one or more image data features from the image data applying the first set (2) of layers (21) of the convolutional neural network (1);
    - Extracting one or more depth data features from the depth data applying the second set (3) of layers (31) of the convolutional neural network (1);
    - Fusing the one or more image data features and the one or more depth data features to obtain at least one fused feature map;
    - Processing the at least one fused feature map by applying the third set (5) of layers (51) of the convolutional neural network (1) to identify/classify the object and to provide the 3D localization data for the identified/classified object, wherein the 3D localization data includes object reference point data.

2. Method according to claim 1, wherein the fusing includes concatenating the image data features and the depth data features, followed by applying a 1x1 convolutional layer with an adjusted number of filters such that number of channels is maintained.

3. Method according to claim 2, wherein the dimension of the concatenated feature maps is reduced to the dimension of the one or more image data features.

4. Method according to any of the claims 1 to 3, wherein the object reference point data comprises a 3D centroid indicating 3D coordinates of a geometric center of the object or a center of mass of the object.

5. Method according to any of the claims 1 to 4, wherein the processing of the at least one fused feature map by applying the third set (5) of layers (51) of the convolutional neural network (1) is performed to obtain bounding data indicating an outline of the identified/ classified object.

6. Method according to any of the claims 1 to 5, wherein the first, second and/or third set (2, 3, 5) of layers (21, 31, 51) include one or more convolution layers, activation layers and/or one or more normalization layers and/or one or more residual blocks, particularly with skip connections, and/or one or more upsampling layers.

7. A convolutional neural network (1) with a first set (2) of consecutive layers (21), a second set (3) of consecutive layers (31) and a third set (5) of consecutive layers (51), each layer being configured with one or more filters, wherein a fusion layer (4) is configured to fuse one or more image data features obtained by the first set (2) of layers (21) and one or more depth data features obtained by the second set (3) of layers (31), wherein the convolutional neural network (1) is trained to associate an image data item and a depth data item to an identification/classification of an object and corresponding 3D localization data for the identified/classified object, wherein the 3D localization data includes object reference point data.

8. Method for training the convolutional neural network (1) of claim 7, wherein the convolutional neural network (1) is trained using training data, wherein each training data item includes image data and depth data, and 3D localization data, wherein at least a part of the training data items is synthetically generated.

9. Method according to claim 8, wherein the synthetically generated training data is rendered using a 3D graphics engine with foreground and background randomization, wherein one or multiple foreground objects are included in each training data item.

10. Method according to claim 8 or 9, wherein a further training data item is generated from an image data item and corresponding depth data item of a training data item by

> - randomly cropping or expanding the image data from the training data item while maintaining the aspect ratio and
> - resizing the dimensions of the cropped/expanded image data item to the dimension of the image data of the training data item by applying a zoom factor which depends on the dimension of the image data of the training data item and the dimension of the cropped image data;
> - adapting the depth data item and the associated 3D localization data of the identified/classified object depending on the zoom factor to obtain the further training data item.

11. Device for 3D localization of an object/individual based on image data and depth data indicating distance information for pixels of an image represented by the image data, wherein a convolutional neural network (1) is configured with a first set (2) of consecutive layers (21), a second set (3) of consecutive layers (31) and a third set (5) of consecutive layers (51), each layer is configured with one or more filters, wherein a fusion layer (4) is configured to fuse one or more image data features obtained by the first set (2) of layers (21) and one or more depth data features obtained by the second set (3) of layers (31) to obtain at least one fused feature map to be further processed by the third set of layers, wherein the convolutional neural network (1) is trained to associate an identification/ classification of an object and corresponding 3D localization data for the identified object to an image data item and a depth data item, wherein the device is further configured to perform the steps of:

> - Extracting one or more image data features from the image data applying the first set (2) of layers (21) of the convolutional neural network (1);
> - Extracting one or more depth data features from the depth data applying the second set (3) of layers (31) of the convolutional neural network (1);
> - Fusing the one or more image data features and the one or more depth data features to obtain at least one fused feature map;
> - Processing the at least one fused feature map by applying the third set (5) of layers (51) of the convolutional neural network (1) to identify the object and to provide the 3D localization data for the identified object, wherein the 3D localization data includes object reference point data.

12. A computer program product comprising a computer readable medium, having thereon computer program code means, when said program is loaded, to make the computer execute procedure to perform all steps of the method according to any of the claims 1 to 10.

13. A machine readable medium, having a program recorded thereon, where the program is to make the computer execute a method according to any of the claims 1 to 10.

# Fig. 1

EP 3 905 107 A1

Europäisches
Patentamt

European
Patent Office

Office européen
des brevets

## EUROPEAN SEARCH REPORT

**Application Number**

EP 20 17 2028

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Timm Linder ET AL: "Towards Accurate 3D Person Detection and Localization from RGB-D in Cluttered Environments", <br><br> 5 October 2018 (2018-10-05), XP055726673, Retrieved from the Internet: URL:http://iliad-project.eu/wp-content/upl oads/2018/10/linder_irosws18_abstract_and_ poster.pdf [retrieved on 2020-09-01] * abstract * * figure 1 * * page 3 * | 1-13 | INV. G06K9/00 G06K9/46 G06K9/62 G06N3/04 |
| Y | TANGUY OPHOFF ET AL: "Exploring RGB+Depth Fusion for Real-Time Object Detection", SENSORS, vol. 19, no. 4, 19 February 2019 (2019-02-19), pages 1-13, XP055726658, DOI: 10.3390/s19040866 * abstract * * figure 1 * * section 2.1 * * section 2.2 * | 1-13 | |
| A | István Sárándi ET AL: "How Robust is 3D Human Pose Estimation to Occlusion?", <br><br> 28 August 2018 (2018-08-28), XP055726732, Retrieved from the Internet: URL:https://arxiv.org/pdf/1808.09316.pdf [retrieved on 2020-09-01] * the whole document * | 8,9 | TECHNICAL FIELDS SEARCHED (IPC) <br><br> G06K G06N |

The present search report has been drawn up for all claims

| Place of search | Date of completion of the search | Examiner |
|---|---|---|
| The Hague | 2 September 2020 | Martinez, Francis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)